# EUROPEAN PATENT APPLICATION

(11) **EP 1 469 385 A2**
(43) Date of publication of application: **20.10.2004**
(21) Application number: 04009103.5
(22) Date of filing: 16.04.2004
(51) Int. Cl.: G06F 9/445

(54) **Method and system for patch management**

(30) Priority: 16.04.2003 US 463370 P; 01.07.2003 US 484260 P
(71) Applicant: Novadigm, Inc., Mahwah, NJ 07495 (US)
(72) Inventor: Kanoor, Madhu, Fair Lawn New Jersey 07410 (US); Hammond, Richard P., Simsbury Connecticut 06070 (US); Fitzgerald, Joseph J., Flanklin Lakes New Jersey 07417 (US); Lagrasta, Sam, North Haledon New Jersey 07508 (US); Clarizio, Dan, Antelope California 95843 (US); McCullough, Greg, Kinnelon New Jersey 07405 (US)
(74) Representative: Banzer, Hans-Jörg, Dipl.-Ing.

(57) **Abstract**

A method and system for patch management. The method and system automatically determines a set of patches applicable to a target device and initiates transfer, if necessary, to the target device and records which patches if any, have been transferred to the target device. The method and system also automatically distributes patches to a target device based on policy, state and management data. The method and system allow patches to be automatically acquired and managed for patch gap, patch vulnerability and patch security compliance.

## Description

### CROSS REFERENCES TO RELATED APPLICATONS

This application claims priority to U.S. Provisional Application Nos. 60/463,370 filed April 16, 2003, and 60/484,260, filed on July 1, 2003.

### FIELD OF THE INVENTION

This invention relates to the process of modifying computer software. More specifically it pertains to a method and system for the management of patching computer software including on target devices or systems. These software updates or "patches" are designed to fix security vulnerabilities, correct program errors, address performance problems, and improve reliability as well as add new features or capabilities.

### BACKGROUND OF THE INVENTION

Software and hardware vendors very often release patches outside of their major software releases in order to solve problems in their software. Such software vendors make patches available for their products and they recommend or advise that these be installed on the target devices, target computers and target systems. There are many problems associated with the management of patches including the identification of affected systems, acquisition of the patches, distribution of the patches to the target systems, tracking which systems have been patched and which haven't. Additionally the constant change associated with computer systems today sometimes causes the inadvertent removal of previously installed ("applied") patches resulting in unstable or insecure systems.

One problem is that for many enterprises, comprehensive patch management is simply not economically feasible due to the enormity of the procedure, lack of automation, and the drain on Information Technology (IT) resources. Instead, such enterprises live with what is perceived to be "acceptable" levels of risk as they slowly and manually process only the patches that their resources allow. However perceived acceptable levels of risk can quickly lead to loss of revenues, theft of intellectual property or diminished levels of services and security provided to customers.

Another problem is that software vendors typically release patches very frequently making the process of obtaining and installing the patches very complicated and very manually intensive. It is often difficult to know what patches have already been applied and what patches still need to be applied and how a new patch interacts with an old patch that has already been applied.

Security related patches are designed to eliminate or reduce security risks to target systems. A common security risk is associated with an unchecked buffer, where if exploited an attacker can gain privileged access to a system, which could lead to the installation of harmful programs, visibility to confidential data, directory traversal, the ability to change or delete data, and possibly the capability to create new user accounts with full privileges.. Another security risk is associated with a Denial of Service Attack, where an attacker can disrupt a service, prevent a particular individual from accessing a service, disrupt connections between two or more systems, and/or cause the system to enter an endless cycle consuming some or all of the systems availability.. In some cases, a patch can identify and address a particular exposure, but lend itself to yet another vulnerability, where if exploited can provide an attacker with subsequent unlawful entry to previously targeted systems.

Some of the issues faced in the field of patch management are summarized by Mark Nicolett and Ronni Colville, *Patch Management Functional Requirements,* Gartner Inc. Advisory Services, Feb. 27, 2003, herein incorporated by reference in its entirety for all purposes. One example of an approach to patch management is illustrated in U.S. Pat. Appln. Publication US 2002/0100036 A1 for a "Non-invasive Automatic Offsite Patch Fingerprinting and Updating System and Method," herein incorporated by reference in its entirety for all purposes.

Microsoft, Patchlink, BigFix, Shavlik, St. Bernard and others have attempted to solve some of the problems associated with obtaining, installing and tracking patches. However, these products still do not solve all of the problems associated with obtaining installing and tracking patches.

Thus, it is desirable to provide an automated solution to obtain patches, qualify target systems and manage their deployment and continuously ensure the patch is still applied and not removed, regressed, compromised or corrupted.

### BRIEF SUMMARY OF THE INVENTION

According to the present invention, this object is achieved by a method for updating and maintaining current operating information on a processor-based target device according to independent claims 1, 10 and 17, respectively, and a method for managing patches for software as defined by independent claim 24. In addition, the present invention provides a computer readable medium having computer executable instruction or electronically readable signals stored thereon for performing any one of the aforesaid methods. Furthermore, the above object is achieved by a system for updating and maintaining current operating information on a processor-based target device as defined by independent claim 30 and independent claim 36, respectively. The dependent claims each define preferred and advantageous embodiments of the present invention. The method and system of the invention automatically determines a set of patches applicable to a target device and initiates transfer, if necessary, to the target device and records which patches if any, have been transferred to the target device. The method and system also automatically distributes patches to a target device based on policy, state and management data.

An embodiment of the method, according to one aspect of the present invention, for updating and maintaining current operating information on a processor-based target device calls for discovering current operating information associated with the target device, comparing the current operating information associated with the target device with updated operating information retrievable from a database, and identifying at least one patch applicable to the discovered current operating information associated with the target device. This embodiment further involves determining if the identified patch has been applied on the target device and, if necessary, applying the identified patch on the target device, as well as entering an updated patch status of the target device in the database.

An embodiment of the method, according to another aspect of the present invention, for updating and maintaining current operating information on a processor-based target device involves discovering current operating information associated with a target device, comparing the current operating information against a desired state of information, for the target device to determine, based on policy data associated with the target device, whether at least one patch needs to be applied to the target device, and transferring the desired state of information to the target device. This embodiment also calls for having a target agent compare the desired state of information to the current operating information in order to identify if at least one patch should be applied to the target device and sending a patch list from the target agent to a second device requesting at least one patch that should be applied to the target device. This embodiment also involves forwarding the patch from the second device to the target device and applying the patch to the target device.

An embodiment of the system, according to the present invention, for updating and maintaining current operating information on a processor-based target device includes at least one target device configured to receive a patch and a second device configured to perform a database look-up to identify at least one patch applicable to the at least one target device, the second device capable of sending to the at least one target device a list of the at least one patch applicable to the at least one target device and receiving from the at least one target device an updated message regarding the patch status of the at least one target device.

An embodiment of another method, according another aspect of the present invention, for managing patches for software sets forth automatically acquiring a plurality of patches from a plurality of vendors for a plurality of software products, automatically discovering current operating information associated with a plurality of target devices, and automatically completing a vulnerability assessment for the acquired plurality of patches using the discovered current operating information associated with the plurality of target devices. This embodiment also sets forth automatically completing an impact analysis for applying the acquired plurality of patches to the discovered current operating information for the plurality of target devices, automatically deploying the plurality of patches to the plurality of target devices based on policy-based information, wherein the policy-based information includes in-part, information from the vulnerability assessment and the impact analysis, and automatically installing the deployed plurality of patches on the plurality of target devices.

The foregoing and other features and advantages of preferred embodiments of the present invention will be more readily apparent from the following detailed description. The detailed description proceeds with references to the accompanying drawings.

### BRIEF DESCRIPTION OF THE DRAWINGS

The invention is described with reference to the following drawings, wherein:

FIG. 1 is a block diagram illustrating an exemplary electronic information updating system;

FIG. 2 is a flow diagram illustrating a method for updating and maintaining current operating information on a processor-based target device;

FIGS. 3A and 3B are a flow diagram illustrating a method for updating and maintaining current operating information on a processor-based target device;

FIG. 4 is a flow diagram illustrating a method for updating and maintaining current operating information on a processor-based target device;

FIG. 5 is a flow diagram illustrating a method for patch management; and

FIG. 6 is a block diagram illustrating a patch management system.

### DETAILED DESCRIPTION OF THE INVENTION

### INFORMATION UPATING SYSTEM

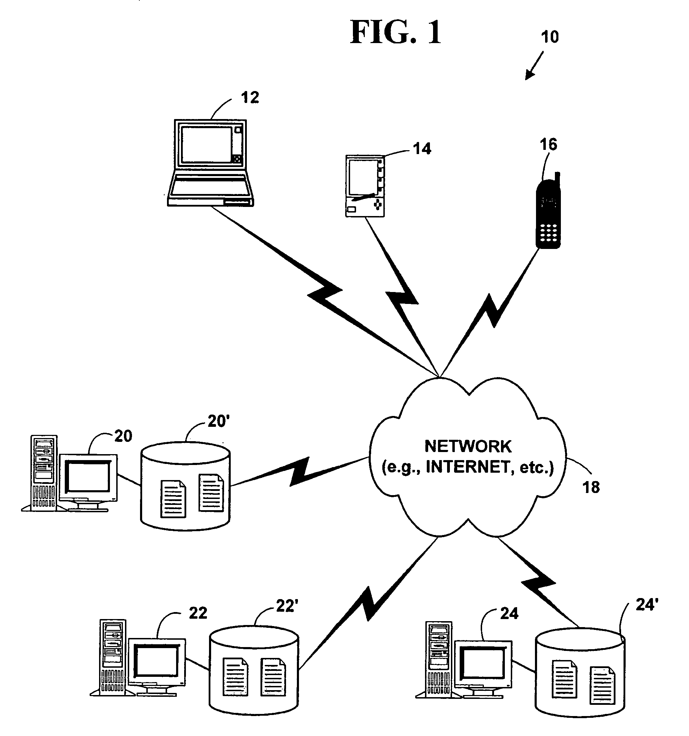

FIG. 1 is a block diagram illustrating an exemplary electronic information updating system 10. Exemplary electronic information updating system 10 includes, but is not limited to, one or more target devices 12, 14, 16 (only three of which are illustrated). The target devices 12, 14, 16 include, but are not limited to, personal computers, wireless devices, laptop computers, mobile phones, personal information devices, personal digital/data assistants (PDA), hand-held devices, network appliances, one and two-way pagers, and other types of electronic devices including servers, non-personal computers such as mainframe computers, minicomputers, etc. However, the present invention is not limited to these devices and more, fewer or others types of target electronic devices can also be used.

The target devices 12, 14, 16 are in communications with a communications network 18 (e.g., the Internet, intranet, Public Switch Telephone Network (PSTN), Local Area Network, (LAN), Wide Area Network (WAN), etc.). The communications includes, but is not limited to, communications over a wire connected to the target network devices, wireless communications, and other types of communications using one or more communications protocols.

Plural server devices 20, 22, 24 (only three of which are illustrated) include one or more associated databases 20', 22', 24'. The plural network devices 20, 22, 24 are in communications with the one or more target devices 12, 14, 16 via the communications network 18. The plural server devices 20, 22, 24, include, but are not limited to, World Wide Web servers, Internet servers, file servers, patch servers other types of electronic information servers, and other types of server network devices (e.g., edge servers, firewalls, routers, gateways, etc.).

An operating environment for the devices of electronic information updating system include a processing system with one or more high speed Central Processing Unit(s) ("CPU"), processors and one or more memories. In accordance with the practices of persons skilled in the art of computer programming, the present invention is described below with reference to acts and symbolic representations of operations or instructions that are performed by the processing system, unless indicated otherwise. Such acts and operations or instructions are referred to as being "computer-executed," "CPU-executed," or "processor-executed."

It will be appreciated that acts and symbolically represented operations or instructions include the manipulation of electrical signals by the CPU or processor. An electrical system represents data bits which cause a resulting transformation or reduction of the electrical signals, and the maintenance of data bits at memory locations in a memory system to thereby reconfigure or otherwise alter the CPU's or processor's operation, as well as other processing of signals. The memory locations where data bits are maintained are physical locations that have particular electrical, magnetic, optical, or organic properties corresponding to the data bits.

The data bits may also be maintained on a computer readable medium including magnetic disks, optical disks, organic memory, and any other volatile (e.g., Random Access Memory ("RAM")) or non-volatile (e.g., Read-Only Memory ("ROM"), flash memory, etc.) mass storage system readable by the CPU. The computer readable medium includes cooperating or interconnected computer readable medium, which exist exclusively on the processing system or can be distributed among multiple interconnected processing systems that may be local or remote to the processing system.

In one embodiment, the electronic information updating system 10 includes, but is not limited to, a means for discovering the current operating information associated with the target device, means for transferring the current operating information associated with the target device to a second device, a means for comparing the current operating information associated with the target device with updated system operating information retrievable from a database by the second device, a means for identifying at least one patch applicable to the current operating information associated with the target device; a means for forwarding the at least one patch from the second device to the target device; a means for determining if the at least one patch has been applied on the target device and, if necessary, applying the at least one patch on the target device; a means for generating an updated patch status on the target device; a means for sending the updated patch status to the second device; and a means for using the second device to enter the updated patch status of the target device in the database.

In another embodiment, the electronic information updating system 10 includes, but is not limited to, at least one target device (e.g., 14) configured to receive a patch, a second device configured to perform a database (e.g., 20') look-up to identify at least one patch applicable to the at least one target device 14, the second device capable of sending to the at least one target device 14 a list of the at least one patch applicable to the at least one target device 14 and receiving from the at least one target device 14 an updated message regarding the patch status of the at least one target device. The second device includes one or more of servers 20, 22, 24.

The electronic information updating system 10 further includes, but is not limited to, a target agent residing in the at least one target device, the target agent capable of: receiving the list of the at least one patch applicable to the at least one target device, determining whether the at least one patch has been applied to the at least one target device, generating a patch status for the at least one target device and sending the patch status to the second device. This system may further comprise an administrator (not illustrated) capable of querying the database (e.g., 20', 22', 24') to determine a patch status of the at least one target device 14. The administrator can query the database when the target device 14 is not in communication with the second device 20.

### AUTOMATIC PATCH MANAGEMENT

As is known in the art, a "patch" is one or more instructions that are inserted into operating information for a device as a temporary fix for a bug to repair a deficiency in the functionality of existing operating information. Patching is a common means of correcting and error or adding a feature or a function to a program until the next version of the operating information or operating hardware is released.

For example, the software that operates a computer system typically requires updates or repairs during the lifecycle of the software. A patch is an update to software, hardware, firmware, BIOS, or configuration including, but not limited to, an operating system, an application program, a device driver, or a system firmware or BIOS, e.g., the target software. A patch is often referred to as a fix, a hotfix, an upgrade, a flash update, a service pack, or an enhancement. A patch is typically a self-executing packet that includes changes or updates to the target code and may include a patch manifest. A patch manifest is a detailed list (can be partial or complete) of the contents of a patch that can be used to determine or verify that a patch has, or has not, been applied to a system. This includes, but is not limited to, properties of modules contained within the patch (including location, date, time, size, version, calculated checksum, etc), version dependencies, prerequisite patches, superceded patches, and configuration settings installed by the patch. However, the invention is not limited to the types of patches described and other types of patches can be used to practice the invention.

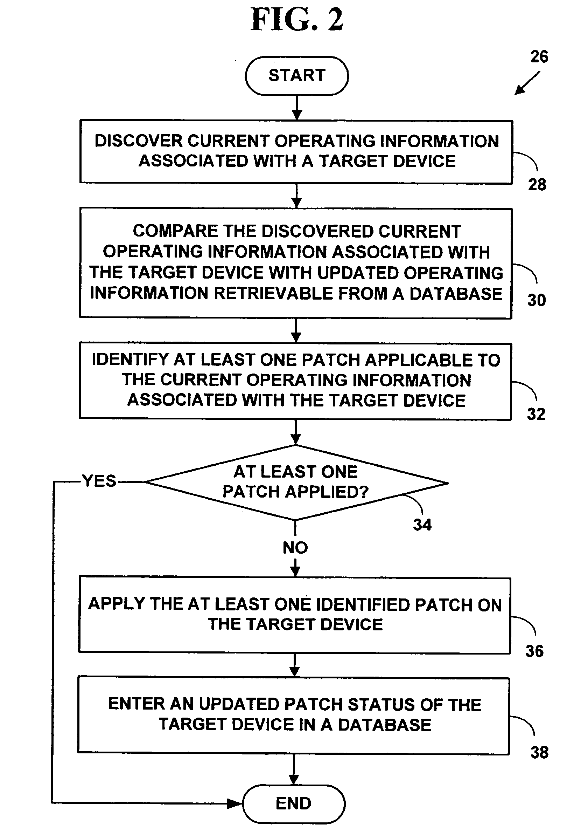

FIG. 2 is a flow diagram illustrating a Method 26 for updating and maintaining current operating information on processor-based target device. At Step 28, current operating information associated with a target device (e.g., 14) is discovered. At Step 30, the discovered current operating information associated with the target device 14 is compared with updated operating information retrievable from a database (e.g., 20'). At Step 32, at least one patch applicable to the current operating information associated with the target device 12 is identified. At Step 34 a test is conducted to determine if the at least one identified patch has been applied on the target device 14 and if necessary, at Step 36 applying the at least one identified patch on the target device 14. At Step 38, an updated patch status of the target device is entered in a database 20'.

In one embodiment, Step 28 includes discovering current operating information associated with multiple target devices 12, 14, 16. In one embodiment, the current operating information of the target device includes, but is not limited to, (a) an identity and version level of at least one software application program currently residing on the target device; (b) an identity and version level of at least one operating system residing on the target device; (c) an identity and version level of at least one hardware device residing on the target device; and (d) an identity and version level of at least one firmware program residing on the target device.

In one embodiment, Method 26 further includes the steps of querying the database (e.g., 20') to determine the patch status of the target device (e.g., 14); and identifying the gaps in patch coverage for the target device 14.

In one embodiment, the target device 14 is in communication with a server (e.g., 20). In one embodiment, the target device includes multiple target devices. In one embodiment the multiple target devices 12, 14, 16 include multiple mobile devices.

If a patch is applied to a target device, the target device may have to be rebooted. If a reboot is required, a user of the target device may be requested to log off a network connection. Patches may also be downloaded at a first instance of time and applied at a second, later instance of time. This information, includes, but is not limited to, a portion of the policy data associated with patches.

The information regarding the patches applied to each target device 12, 14, 16 is maintained in one or more databases 20', 22' 24. The information may be periodically provided automatically by a target agent on the target device 12, 14, 16 or automatically updated each time a patch is applied to the target device 12, 14, 16. The resulting databases includes current operating information or state for each target device 12, 14, 16 that may also be manually queried by an administrator to evaluate which patches have been applied to each of the target devices 12, 14, 16 without having to query the target devices 12, 14, 16.

As is know in the art, a "state" is a condition of one or more elements or components of a target device at a particular instance of time. A "desired state" for a target device includes, but is not limited to, a state of: checked for new patches, new patches applied, new patches verified and/or new patches recorded. A desired state of patches of multiple target devices is managed in-part based on desired state information.

Target devices 12, 14, 16 are often unavailable for querying. For example, the device may be a portable device that is not continuously connected to the network 18. Also, a target device may be inaccessible due to communication failure or other breakdowns. Automatic target device 12, 14, 16 state reporting provides for continuous monitoring of product state and patch state is fed to a server 20, 22, 24 for analysis. In this aspect of the present invention, the administrator is able to quickly access information on the target devices 12, 14, 16 without waiting for the results of queries to each device in order to evaluate the current status of patches on the target devices, 12, 14, 16.

In one embodiment, a patch state includes, but is not limited to, whether a patch has been downloaded and is available for test, whether the patch is ready to be published, and/or whether the patch has been published to other target devices. However, the present invention is not limited to these patch states and other patch states can also be used.

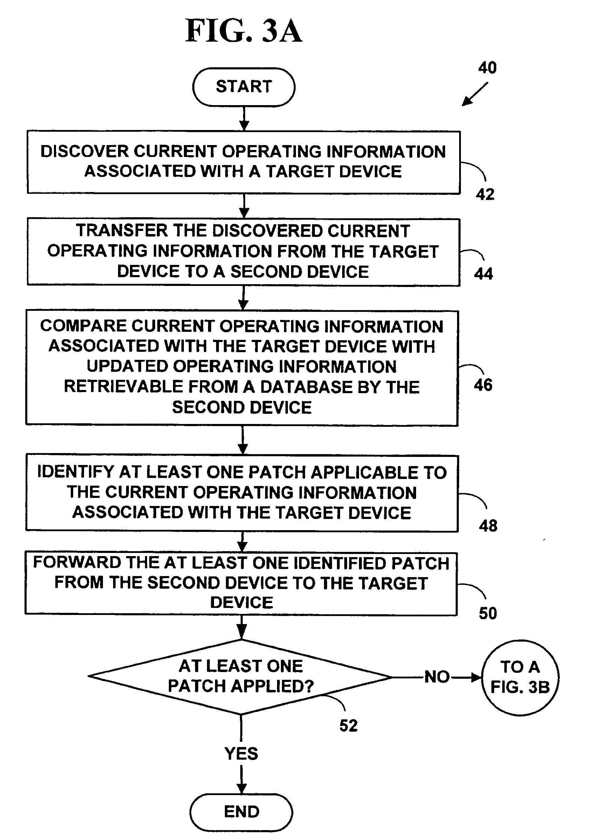

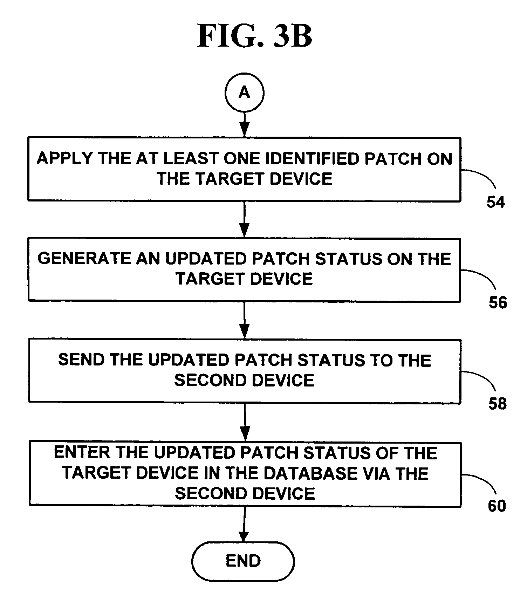

FIGS. 3A and 3B are a flow diagram illustrating a Method 40 for updating and maintaining current operating information on a processor-based target device. In FIG. 3A at Step 42, current operating information associated with the target device is discovered. At Step 44, the discovered current operating information associated with the target device is transferred to a second device. At Step 46, current operating information associated with the target device is compared with updated operating information retrievable from a database by the second device. At Step 48, at least one patch applicable to the current operating information associated with the target device is identified. At Step 50, the at least one identified patch is forwarded from the second device to the target device. At Step 52, a test is conducted to determine if the at least one identified patch has been applied on the target device and, if necessary, in FIG. 3B at Step 54 the at least one identified patch is applied on the target device. At Step 56, an updated patch status is generated on the target device. At Step 58, the updated patch status is sent to the second device. At Step 60, the second device is used to enter the updated patch status of the target device in the database.

In one embodiment, Step 42 includes discovering current operating information associated with multiple target devices 12, 14, 16. In one embodiment, the current operating information of the target device includes, but is not limited to, (a) an identity and version level of at least one software application program currently residing on the target device; (b) an identity and version level of at least one operating system residing on the target device; (c) an identity and version level of at least one hardware device residing on the target device; and (d) an identity and version level of at least one firmware program residing on the target device.

In one embodiment Method 40 further includes the steps of querying the database (e.g., 20') to determine the patch status of the target device (e.g., 14); and identifying any gaps in patch coverage for the target device 14.

In one embodiment, the target device is in communication with a server (e.g., 20). In one embodiment, the target device includes multiple target devices. In one embodiment, the multiple target devices include multiple mobile devices. In one embodiment, the second device is a server (e.g., 20, 22, 24).

In a further refinement of Method 40, an administrator queries the database (e.g., 20) to analyze the patch status of the target device (e.g., 14), which enables the administrator to identify gaps in patch coverage based on query parameters for the target device 14.

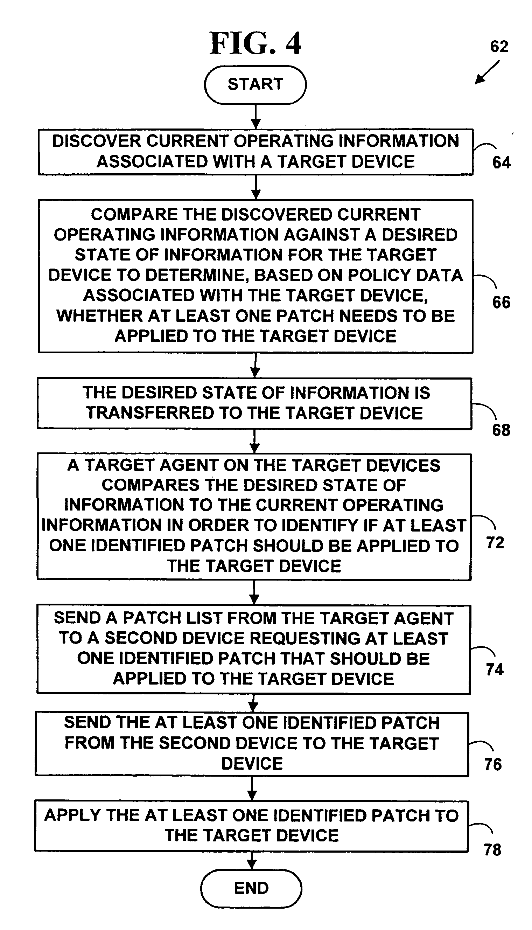

FIG. 4 is flow diagram illustrating a Method 62 for updating and maintaining current operating information on a processor-based target device. At Step 64, current operating information associated with a target device is discovered. At Step 66, the discovered current operating information is compared against a desired state of information for the target device to determine, based on policy data associated with the target device, whether at least one patch needs to be applied to the target device. At Step 68, the desired state of information is transferred to the target device. At Step 70, a target agent on the target devices compares the desired state of information to the current operating information in order to identify if at least one patch should be applied to the target device. At Step 72, a patch list from the target agent is sent to a second device requesting at least one identified patch that should be applied to the target device. At Step 74, the at least one identified patch is sent from the second device to the target device. At Step 76, the at least one identified patch is applied to the target device.

In one embodiment, the target device is in communication with a server (e.g., 20). In one embodiment, the target device includes multiple target devices. The multiple target devices include multiple mobile devices. In one embodiment, the second device is a server (e.g., 20, 22, 24).

In one embodiment, Step 66, the comparing step is performed using a differencing method. In one embodiment, the at least one patch that the policy data indicates should be applied to the target device is sent to the target device without a request from the target agent. In one embodiment, the policy data includes qualitative information about each patch. In one embodiment, an administrator determines, based on the qualitative data, whether a patch should be applied on the target device. In one embodiment, the determination of the administrator is included in the policy data.

Method 62 is also used for state management of patches on target devices using policy data. Policy data may be viewed as the process of specifying and the related method of determining the patches specified for a particular computing device, based on, but not limited to, properties of the user of a device (name, location, department, job classification, etc), the properties of the device (name, network location, connection speed, processor type, amount of storage, etc), the role of the target device (server, kiosk, ATM), or the privileges of the device and/or user (admin, user, customer, partner, service plan).

Using identifying information for the target device in combination with policy data, a desired state for the target device may be determined, i.e., the patches that should be applied to the target device may be identified. In one embodiment of this aspect of the present invention, state patch management is used for a target device. Identifying information for each target device is collected by a target agent at the target device. The identifying information is sent to a policy server device that compares the identifying information for the target device to policy data for the target device to determine a desired state for patches on the target device. The desired state is sent to the target agent, which compares the desired state to the current state of the target device to identify each patch that should be applied to the target device, but has not been applied. The target agent requests each patch that should be applied from a server device, which returns the patch to the target agent. The patch is then applied to the target device.

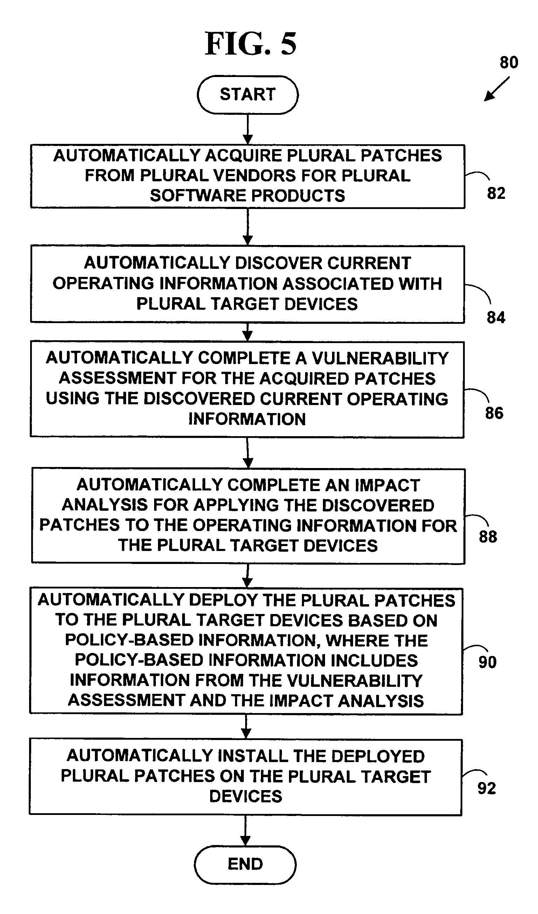

FIG. 5 is a flow diagram illustrating a Method 80 for patch management. At Step 82, plural patches are automatically acquired from plural software vendors for plural software products. At Step 84, current operating information associated with plural target devices is discovered. At Step 86, a vulnerability assessment for the acquired plural patches is automatically completed using the discovered current operating information. At Step 88, an impact analysis for applying the acquired patches to the operating information for the plural target devices is automatically completed. At Step 90, plural patches are automatically deployed to the plural target devices based on policy-based information. The policy-based information includes, but is not limited to information from the vulnerability assessment and the impact analysis. At Step 92, deployed plural patches are automatically installed on the plural target devices.

In one embodiment, at Step 86 the vulnerability analysis includes a patch gap analysis for each target device that helps ensure patch level compliance and identifies which new patches are required on a target device. A comprehensive analysis can be performed on any one target device, or on all target devices in an enterprise and takes into account any combination of existing operating information including, but not limited to, operating system components, application components and existing patches.

In one embodiment at Step 88 the impact analysis includes using component information captured during decomposition of a patch as was described above and used for conflict analysis with other operating information including, but not limited to, including operating system components, application components and existing patches. The impact analysis helps administrators identify and eliminate possible problems before a patch is deployed throughout an enterprise, helping ensure ongoing reliability of an IT infrastructure.

In one embodiment, Method 80 further comprises automatically verifying application of the deployed plurality of patches on the plurality of target devices. In one embodiment, Method 80 further comprises automatically performing quality assurance operations on the plural target devices to provide a desired level of quality for application of the deployed plural patches on the plural target devices.

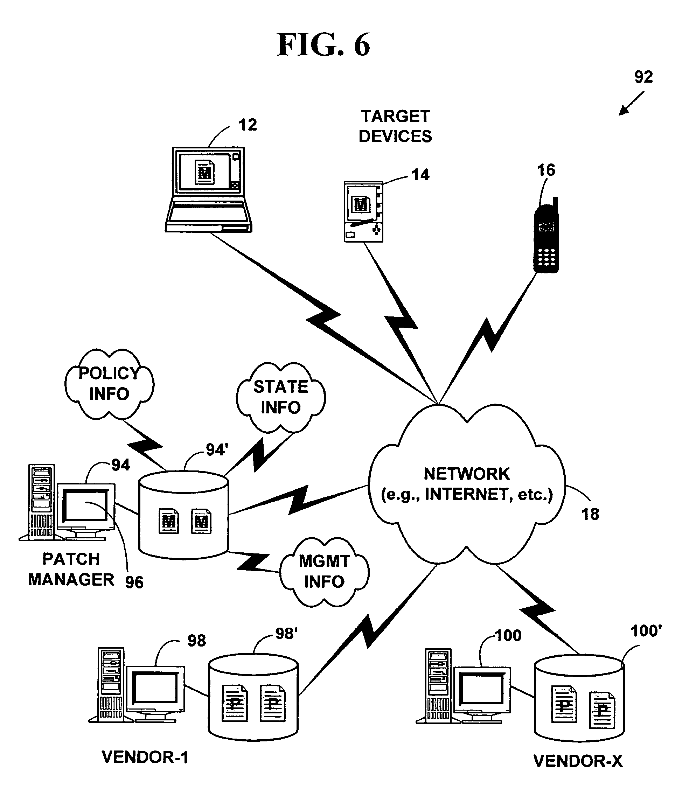

FIG. 6 is a block diagram illustrating a patch management system 92. The patch management system 92 includes a patch management server 94 with one or more associated databases 94' (one of which is illustrated) and a graphical user interface (GUI) associated with the patch management server 94. The GUI 96 is used by an administrator to configure, monitor and/or manually interact with the patch management server. The patch management server 94 applies policy, state and management information to patches as was described by the methods and systems herein. Patches (e.g., patches including a "P" in FIG. 6) are obtained from plural vendor servers 98, 100 (two of which are illustrated). The patches are obtained, installed, and managed (e.g., patches including an "M" in FIG. 6) on plural target devices 12, 14, 16 using the methods and systems described herein.

In one specific embodiment of the invention for target devices using the Microsoft Windows Operating Systems (e.g., NT, XP, 95, 98, 2000, ME, CE, etc.) patches and hotfixes that are applicable to target devices are identified and downloaded. These patches are typically located at well know Universal Resource Locators (URLs) on the Internet and are typically described in MSSECURE.XML or other electronic documents. Descriptions and FAQs about MSSECURE can be found at the URL "www.microsoft.com." The methods and system described herein provide a method to filter out patches that are not needed for Microsoft and other types of operating systems. For example, if an administrator is managing target devices that don't include Windows 95 or Windows XP there is no need to download or install patches for these operating systems. The filtering criteria includes, but is not limited to, operating system type, date of availability, language supported, patch severity, and specific application.

The discovery steps for the methods described herein incorporate techniques to scan areas on a target device where Microsoft applications regularly register product information including the WMI and Win32_Product classes and the "App Path" and Add/Remove Program sections of the Windows registry.

In another embodiment, the methods and system described herein are used on target devices including HP Ux, Sol, Linux, IBM AIX, Solaris, Novell and other operating systems and applications for which patches are produced and made available and for which locations and target areas are also known.

In one embodiment, the discovery steps for the methods described herein include using a product discover object including multiple fields as is illustrated in Table 1. However, the present invention is not limited to this embodiment and other types of information can be discovered with the discovery steps and is not limited to the discovery object illustrated. Other discovery objects with more, fewer or other fields can also be used.

**Table 1.**

| **Variable Name** | **Variable** |
|---|---|
| PRODNAME | Product Name |
| FVERSION | File Version |
| PVERSION | Product Version |
| VENDOR | Vendor/Company Name |
| PRODGUID | Identifying Number |
| LANGUGE | Language |
| PSVCPACK | Product Service Pack |

The methods and system described herein are intended to be used in an automatic mode without manual intervention by an administrator. However, the methods and system provide for manual intervention by administrators. An administrator may desire to manually validate patches and/or deploy the patches only to a limited number of target devices or servers.

U.S. Pat. Nos. 5,581,764; 6,292,889; 6,463,583; and 6,550,060, herein incorporated by reference in their entirety for all purposes, represent examples of technology suitable for implementing certain embodiments of the present invention.

The policy data above can also be adapted to include qualitative information about each patch. For example, information from a corporation or across a number of corporations may be correlated against performance statistics of servers that do and do not have a particular patch applied to determine the performance impact of the patch. An administrator may then make a policy decision as to whether the patch should be applied or not based on the experience based performance data. For example, performance data may be maintained for a patch based on the configuration of the target device, e.g., Dell server with Oracle database software and statistics regarding the application programs installed on the target device.

Another refinement of the state-based aspect of the present invention is to break down patches into their component parts and manage the state of patch components on each target device. In one embodiment, patches are broken down into two components including: (1) a state file for import into a database including, but not limited to, patch information, detailed information on patch components and patch target information from a patch authority; and (2) a manifest file for use by a target agent on a target device including, but not limited to, patch target information from the patch authority, prerequisite and supercede patch information, indicators used to determine if a patch is properly installed and information on how to apply the patch. These two components provide security information and policy information for patch management described herein.

For example, where two patches update the same software file on a target device, application of one patch may effectively apply the other patch, e.g., the current version of the software file is introduced by the one patch and the other patch is either no longer necessary or it is not necessary to download the same software file. In other words, applying one patch, but not the other, nonetheless results in the target device being in the desired state with respect to that component software file, e.g., the version of the software file with the most recent creation date. By breaking up each patch into its component parts and managing the state of the component parts on the target device, the amount of overhead due to unnecessary patches may be reduced.

In this approach, patches are obtained from vendors, e.g., by accessing vendor web site or through software updates sent electronically or through storage media. The patch components are then extracted from the patch and placed into storage. The component pieces of the patch are evaluated to determine which application programs, for example, are impacted by the patch.

The applying patches and the applying steps for the methods and systems described herein include installing, uninstalling and/or updating patches to conform to a desired state based on a selected policy.

The methods and systems described herein may be used in an automatic, interactive or batch mode. The method and system provide full lifecycle management of patches, service packs and hotfixes across an entire enterprise. The method and system can be used to rapidly and efficiently address security vulnerabilities and automatically maintain on-going reliability and policy-based patch management.

The methods and systems described herein allow patches to be automatically acquired and managed for patch gap, patch vulnerability and patch security compliance.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

It should be understood that the programs, processes, methods and systems described herein are not related or limited to any particular type of computer or network system (hardware or software), unless indicated otherwise. Various combinations of general purpose, specialized or equivalent computer components including hardware, software, and firmware and combinations thereof may be used with or perform operations in accordance with the teachings described herein.

In view of the wide variety of embodiments to which the principles of the present invention can be applied, it should be understood that the illustrated embodiments are exemplary only, and should not be taken as limiting the scope of the present invention. For example, the steps of the flow diagrams may be taken in sequences other than those described, and more, fewer or other types of elements may be used in the block diagrams.

The claims should not be read as limited to the described order or elements unless stated to that effect. All embodiments that come within the scope and spirit of the following claims and equivalents thereto are claimed as the invention.

## Claims

1. A method for updating and maintaining current operating information on a processor-based target device (12, 14, 16), the method comprising the steps of:
discovering current operating information associated with the target device (12, 14, 16);
comparing the current operating information associated with the target device (12, 14, 16) with updated operating information retrievable from a database (20', 22', 24'; 94', 98', 100');
identifying at least one patch applicable to the discovered current operating information associated with the target device (12, 14, 16);
determining if the at least one identified patch has been applied on the target device (12, 14, 16) and, if necessary, applying the at least one identified patch on the target device (12, 14, 16); and
entering an updated patch status of the target device (12, 14, 16) in the database (20', 22', 24'; 94', 98', 100').

2. The method of claim 1, wherein the current operating information of the target device (12, 14, 16) includes at least one of a group comprised of:
(a) an identity and version level of at least one software application program currently residing on the target device;
(b) an identity and version level of at least one operating system residing on the target device;
(c) an identity and version level of at least one hardware device residing on the target device; and
(d) an identity and version level of at least one firmware program residing on the target device.

3. The method of claim 1 or claim 2, further comprising the steps of:
querying the database (20', 22', 24'; 94', 98', 100') to determine a patch status of the target device (12, 14, 16); and
identifying gaps in patch coverage for the target device (12, 14, 16).

4. The method of any one of claims 1-3, wherein the target device (12, 14, 16) is in communication with a server (20, 22, 24; 94, 98, 100).

5. The method of any one of claims 1-4, wherein the discovering step includes a plurality of target devices (12, 14, 16).

6. The method of claim 5, wherein the plurality of target devices (12, 14, 16) include a plurality of mobile devices.

7. The method of any one of claims 1-6 further comprising a computer readable medium having stored therein instructions for causing a processor to execute the steps of the method.

8. The method of any one of claims 1-7 wherein the at least one identified patch includes two components comprising a state file for importing into the database (20', 22', 24'; 94', 98', 100') and a manifest file used by a target agent on the target device (12, 14, 16) that provides policy information and security information for the at least one identified patch.

9. The method of claim 8 wherein the state file comprises patch information, detailed information about patch components and patch target information from a patch authority and wherein the manifest file includes patch target information from a patch authority, prerequisite and superceded path information, a plurality of indicators used to determine if a patch is properly installed and information on how to apply a patch.

10. A method for updating and maintaining current operating information on a processor-based target device, the method comprising the steps of:
discovering current operating information associated with the target device (12, 14, 16);
transferring the current operating information associated with the target device (12, 14, 16) to a second device (20, 22, 24; 94, 98, 100);
comparing the current operating information associated with the target device (12, 14, 16) with updated operating information retrievable from a database (20', 22', 24'; 94', 98', 100') by the second device (20, 22, 24; 94, 98, 100);
identifying at least one patch applicable to the current operating information associated with the target device (12, 14, 16);
forwarding the at least one identified patch from the second device (20, 22, 24; 94, 98, 100) to the target device (12, 14, 16);
determining if the at least one identified patch has been applied on the target device (12, 14, 16) and, if necessary, applying the at least one identified patch on the target device (12, 14, 16);
generating an updated patch status on the target device (12, 14, 16);
sending the updated patch status to the second device (20, 22, 24; 94, 98, 100); and
using the second device (20, 22, 24; 94, 98, 100) to enter the updated patch status of the target device (12, 14, 16) in the database (20', 22', 24'; 94', 98', 100').

11. The method of claim 10 further comprising a computer readable medium having stored therein instructions for causing a processor to execute the steps of the method.

12. The method of claim 10 or claim 11, wherein the second device (20, 22, 24; 94, 98, 100) is a server.

13. The method of any one of clailms 10-12 wherein the current operating information of the target device (12, 14, 16) includes at least one of the group comprised of:
(a) an identity and version level of at least one software application program currently residing on the target device;
(b) an identity and version level of at least one operating system residing on the target device;
(c) an identity and version level of at least one hardware device residing on the target device; and
(d) an identity and version level of at least one firmware program residing on the target device.

14. The method of any one of claims 10-13, further comprising the steps of:
querying the database (20', 22', 24'; 94', 98', 100') to determine a patch status of the target device (12, 14, 16); and
identifying gaps in patch coverage for the target device (12, 14, 16).

15. The method of any one of claims 10-14, wherein the discovering step includes multiple target devices (12, 14, 16).

16. The method of any one of claims 10-15, wherein the determining step is performed by a target agent residing on the target device (12, 14, 16).

17. A method for updating and maintaining current operating information on a processor-based target device (12, 14, 16), the method comprising the steps of:
discovering current operating information associated with a target device (12, 14, 16);
comparing the current operating information against a desired state of information, for the target device (12, 14, 16) to determine, based on policy data associated with the target device (12, 14, 16), whether at least one patch needs to be applied to the target device (12, 14, 16);
transferring the desired state of information to the target device (12, 14, 16);
having a target agent compare the desired state of information to the current operating information in order to identify if at least one patch should be applied to the target device (12, 14, 16);
sending a patch list from the target agent to a second device (20, 22, 24; 94, 98, 100) requesting at least one patch that should be applied to the target device (12, 14, 16);
forwarding the at least one patch from the second device (20, 22, 24; 94, 98, 100) to the target device (12, 14, 16); and
applying the at least one patch to the target device (12, 14, 16).

18. The method of claim 17, wherein the second device (20, 22, 24; 94, 98, 100) is a server.

19. The method of claim 17 or claim 18, wherein the comparing step is performed using a differencing method.

20. The method of any one of claims 17-19, wherein the at least one patch that the policy data indicates should be applied to the target device (12, 14, 16) is sent to the target device without a request from the target agent.

21. The method of claim 20, wherein the policy data includes qualitative information about each patch.

22. The method of claim 21, wherein an administrator (96) determines, based on the qualitative information, whether a patch should be applied on the target device (12, 14, 16).

23. The method of claim 22, wherein the determination of the administrator (96) is included in the policy data.

24. A method for managing patches for software, comprising:
automatically acquiring a plurality of patches from a plurality of vendors (98, 100) for a plurality of software products;
automatically discovering current operating information associated with a plurality of target devices (12, 14, 16);
automatically completing a vulnerability assessment for the acquired plurality of patches using the discovered current operating information associated with the plurality of target devices (12, 14, 16);
automatically completing an impact analysis for applying the acquired plurality of patches to the discovered current operating information for the plurality of target devices (12, 14, 16);
automatically deploying the plurality of patches to the plurality of target devices (12, 14, 16) based on policy-based information, wherein the policy-based information includes in-part, information from the vulnerability assessment and the impact analysis; and
automatically installing the deployed plurality of patches on the plurality of target devices (12, 14, 16).

25. The method claim 24 further comprising a computer readable medium having stored therein instructions for causing a processor to execute the steps of the method.

26. The method of claim 24 or claim 25 wherein the step of automatically completing a vulnerability analysis includes automatically completing a patch gap analysis to determine where components of the operating information may be vulnerable to applying a patch and identifies which new patches may be required based on the discovered current operating information.

27. The method of any one of claims 24-26 wherein the step of automatically completing an impact analysis includes automatically completing a conflict analysis to determine what new patches may be need and how the new patches may conflict with old patches already applied to the target device (12, 14, 16).

28. The method of any one of claims 24-27 further comprising automatically verifying application of the deployed plurality of patches on the plurality of target devices (12, 14, 16).

29. The method of any one of claims 24-28 further comprising automatically performing quality assurance operations on the plurality of target devices (12, 14, 16) to provide a desired level of quality for application of the deployed plurality of patches on the plurality of target devices (12, 14, 16).

30. A system for updating and maintaining current operating information on a processor-based target device (12, 14, 16), the system comprised of:
means for discovering current operating information associated with the target device (12, 14, 16);
means for transferring the current operating information associated with the target device (12, 14, 16) to a second device (20, 22, 24; 94, 98, 100);
means for comparing the current operating information associated with the target device (12, 14, 16) with updated operating information retrievable from a database (20', 22', 24'; 94', 98', 100') by the second device (20, 22, 24; 94, 98, 100);
means for identifying at least one patch applicable to the current operating information associated with the target device (12, 14, 16);
means for forwarding the at least one patch from the second device (20, 22, 24; 94, 98, 100) to the target device (12, 14, 16);
means for determining if the at least one patch has been applied on the target device (12, 14, 16) and, if necessary, applying the at least one patch on the target device (12, 14, 16);
means for generating an updated patch status on the target device (12, 14, 16);
means for sending the updated patch status to the second device (20, 22, 24; 94, 98, 100); and
means for using the second device (20, 22, 24; 94, 98, 100) to enter the updated patch status of the target device (12, 14, 16) in the database (20', 22', 24'; 94', 98', 100').

31. A system for updating and maintaining current operating information on a processor-based target device (12, 14, 16), the system comprised of:
at least one target device (12, 14, 16) configured to receive a patch; and
a second device (20, 22, 24; 94, 98, 100) configured to perform a database look-up to identify at least one patch applicable to the at least one target device (12, 14, 16), the second device (20, 22, 24; 94, 98, 100) capable of sending to the at least one target device (12, 14, 16) a list of the at least one patch applicable to the at least one target device (12, 14, 16) and receiving from the at least one target device (12, 14, 16) an updated message regarding the patch status of the at least one target device (12, 14, 16).

32. The system of claim 31, wherein the second device (20, 22, 24; 94, 98, 100) is a server.

33. The system of claim 31 or claim 32, further comprised of:
a target agent residing in the at least one target device (12, 14, 16), the target agent capable of: receiving the list of the at least one patch applicable to the at least one target device (12, 14, 16); determining whether the at least one patch has been applied to the at least one target device (12, 14, 16);
generating a patch status for the at least one target device (12, 14, 16); and
sending the patch status to the second device (20, 22, 24; 94, 98, 100).

34. The system of any one of claims 31-33, further comprising an administrator (94) capable of querying the database (94') to determine a patch status of the at least one target device (12, 14, 16).

35. The system of clam 34, wherein the administrator (94) can query the database (94') when the target device (12, 14, 16) is not in communication with the second device (20, 22, 24; 98, 100).

36. A data processing system for updating and maintaining current operating information on a processor-based target device (12, 14, 16), the data processing system comprised of a component for:
discovering current operating information associated with the target device (12, 14, 16);
comparing the current operating information associated with the target device (12, 14, 16) with updated operating information retrievable from a database (20', 22', 24'; 94', 98', 100';
identifying at least one patch applicable to the current operating information associated with the target device (12, 14, 16);
determining if the at least one patch has been applied on the target device (12, 14, 16) and, if necessary, applying the at least one patch on the target device (12, 14, 16); and
entering an updated patch status of the target device (12, 14, 16) in the database (20', 22', 24'; 94', 98', 100').

37. The data processing system of claim 36, wherein the target device (12, 14, 16) is in communication with a second device (20, 22, 24; 94, 98, 100).

38. The data processing system of claim 37, wherein the second device (20, 22, 24; 94, 98, 100) is a server.

39. A computer readable medium having computer executable instructions for performing the method according to any one of claims 1-29 when operated in a computer system (20, 22, 24; 94, 98, 100).
